# EUROPEAN PATENT SPECIFICATION

(11) **EP 4 552 845 B1**
(45) Date of publication and mention of the grant of the patent: **28.10.2026**
(21) Application number: 23862824.2
(22) Date of filing: 28.07.2023
(51) Int. Cl.: B23K 9/04, B33Y 50/00, B22F 10/22, G06F 30/17, G06F 111/10, G06F 113/10, B22F 10/80

(54) **CONTROL INFORMATION GENERATION DEVICE, CONTROL INFORMATION GENERATION METHOD, AND PROGRAM**
VORRICHTUNG ZUR ERZEUGUNG VON STEUERINFORMATIONEN, VERFAHREN ZUR ERZEUGUNG VON STEUERINFORMATIONEN UND PROGRAMM
DISPOSITIF DE GÉNÉRATION D'INFORMATIONS DE COMMANDE, PROCÉDÉ DE GÉNÉRATION D'INFORMATIONS DE COMMANDE, ET PROGRAMME

(30) Priority: 09.09.2022 JP 2022143944
(43) Date of publication of application: 14.05.2025
(73) Proprietor: KABUSHIKI KAISHA KOBE SEIKO SHO (KOBE STEEL, LTD.), Hyogo 651-8585 (JP)
(72) Inventor: CHIKAGUCHI, Satoshi, Hyogo 651-2271 (JP)
(74) Representative: Müller-Boré & Partner Patentanwälte PartG mbB
(86) International application number: PCT/JP2023/027876
(87) International publication number: WO 2024/053281

(56) References cited:
- WO-A1-2020/250446
- WO-A1-2021/186723
- WO-A1-2022/176578
- JP-A- 2019 147 171
- JP-A- 2021 000 644
- US-A1- 2019 315 067

## Description

The present invention relates to a control information generation device, a control information generation method, and a program, see claims 1, 4 and 7 respectively.

### BACKGROUND ART

In recent years, there has been an increasing need for manufacturing a component by additive manufacturing using a 3D printer, and research and development have been advanced toward the practical use of manufacturing using a metal material. For example, Patent Literature 1 discloses a technique in which a three-dimensional model is disassembled to obtain a manufacturing path on which welding beads are formed, and additive manufacturing is performed based on information on the manufacturing path.

JP 2021 000644 A (describing the preamble of claims 1, 4 and 7) relates to a production method for a molding material that includes a process of dividing plural slice data which are obtained by dividing three dimension-shaped data into plural layers, into plural bead data corresponding to plural beads, respectively, a process of allocating an order to plural bead data, respectively, and a process of laminating the bead obtained by melting and solidifying a filler metal according to the allocated order, based on plural bead data.

US 2019/315067 A1 describes the generation of tool path data for use in additive manufacturing that comprises providing object design data in which at least part of the object is represented abstractly using lines and/or surfaces. The lines and/or surfaces can then be used to provide tool path data for the build layers of an additive manufacturing apparatus. The tool paths can be reconfigured to reduce the overall distance travelled and/or travel time when the additive manufacturing apparatus implements the tool path data. An additive manufacturing parameter for a structural feature of the object can also be selected based on the geometry of the structural feature and specified in the tool path data.

### CITATION LIST

### PATENT LITERATURE

Patent Literature 1: US6,274,839B

### SUMMARY OF INVENTION

### TECHNICAL PROBLEM

Generally, in three-dimensional manufacturing, a shape model is sliced based on three-dimensional CAD data, a manufacturing path (hereinafter, also referred to as a "trajectory" or a "path") on which welding beads are formed for each sliced layer is planned, and a bead layer is formed while moving a torch along the planned path. A desired manufactured object is built by depositing such bead layers.

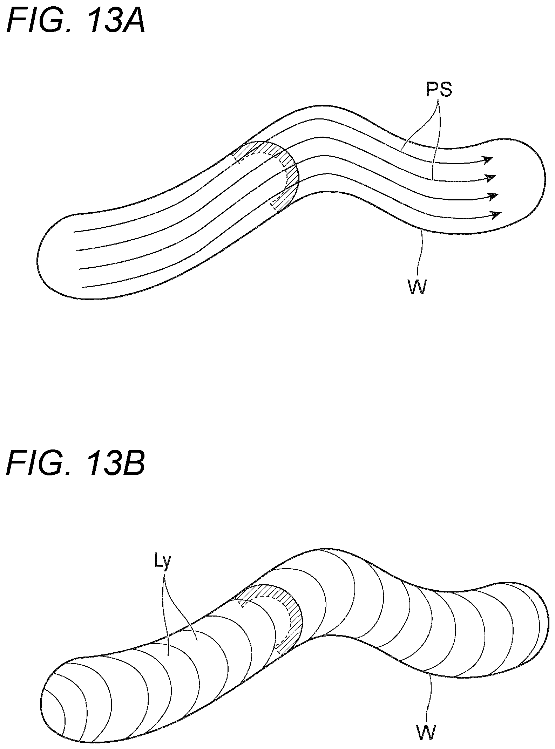

There are various known styles of paths on which welding beads are formed, such as raster, broken line, grid, and concentric circle paths, but the more complex a shape of the manufactured object, the more difficult it becomes to generate the paths themselves. For example, as illustrated in FIG. 13A, in a case of a manufactured object W that fits along an outer surface of a semi-cylindrical flow path and also fits along undulations of the flow path, when a path PS for building the manufactured object W is set along the flow path which is a longitudinal direction, efficient manufacturing is possible. However, it is often difficult to generate such a path PS for the entire manufactured object W in reality, which requires a complicated calculation. On the other hand, when a path is determined by using the technique of Patent Literature 1, a path is generated in each layer Ly obtained by mechanically slicing such a shape in a cross section perpendicular to an additive direction (longitudinal direction of the flow path) as illustrated in FIG. 13B. Accordingly, the path can be easily generated in a layer having a small area, and on the other hand, the number of layers and the number of paths are extremely increased, which is not preferable from the viewpoint of productivity.

Therefore, an object of the present invention is to provide a control information generation device, a control information generation method, and a program for controlling an additive manufacturing device so as to perform efficient additive manufacturing by preventing an increase in the number of layers and the number of paths regardless of a shape of a manufactured object.

### SOLUTION TO PROBLEM

The object of the present invention is solved by a control information generation device, a control information generation method, and a program for controlling an additive manufacturing device having the features of the independent claims 1, 4 and 7 respectively. Additional embodiments are defined in the dependent claims.

### ADVANTAGEOUS EFFECTS OF INVENTION

According to the present invention, an additive manufacturing device can be controlled so as to perform efficient additive manufacturing by preventing an increase in the number of layers and the number of paths regardless of the shape of the manufactured object.

### BRIEF DESCRIPTION OF DRAWINGS

[FIG. 1] FIG. 1 is a schematic diagram illustrating an overall configuration of an additive manufacturing device.
[FIG. 2] FIG. 2 is a schematic functional block diagram of a control information generation device.
[FIG. 3] FIG. 3 is a flowchart illustrating a procedure of generating control information.
[FIG. 4A] FIG. 4A is a diagram illustrating a state in which a three-dimensional shape of a manufactured object is divided to generate bead models.
[FIG. 4B] FIG. 4B is a diagram illustrating a state in which the three-dimensional shape of the manufactured object is divided to generate bead models.
[FIG. 5A] FIG. 5A is a diagram illustrating, in a stepwise manner, a procedure of dividing an elongated target shape into layers to generate a plurality of feature points and coupling the feature points in a division direction of each layer.
[FIG. 5B] FIG. 5B is a diagram illustrating, in a stepwise manner, a procedure of dividing the elongated target shape into layers to generate a plurality of feature points and coupling the feature points in a division direction of each layer.
[FIG. 5C] FIG. 5C is a diagram illustrating, in a stepwise manner, a procedure of dividing the elongated target shape into layers to generate a plurality of feature points and coupling the feature points in a division direction of each layer.
[FIG. 5D] FIG. 5D is a diagram illustrating, in a stepwise manner, a procedure of dividing the elongated target shape into layers to generate a plurality of feature points and coupling the feature points in a division direction of each layer.
[FIG. 6] FIG. 6 is a diagram illustrating bottom surface regions of six unit models illustrated in FIG. 5D in a plan view.
[FIG. 7] FIG. 7 is a diagram illustrating a state in which a point group of the feature points illustrated in FIG. 6 is reconnected from a direction along the layer to the division direction of each layer to generate new paths.
[FIG. 8] FIG. 8 is a diagram illustrating the generated new paths in association with FIG. 5C.
[FIG. 9] FIG. 9 is a diagram illustrating a determination method for determining whether the generated path is appropriate.
[FIG. 10] FIG. 10 is a diagram schematically illustrating a generated curved path in a plan view.
[FIG. 11A] FIG. 11A is a graph illustrating a curve according to a sine function in an x-y plane.
[FIG. 11B] FIG. 11B is a graph illustrating a curvature distribution of the sine curve in FIG. 11A.
[FIG. 12A] FIG. 12A is a graph illustrating a result of adding together sine functions having different periods and amplitudes.
[FIG. 12B] FIG. 12B is a graph illustrating a curvature distribution of a curve illustrated in FIG. 12A.
[FIG. 13A] FIG. 13A is a diagram illustrating an ideal manufacturing path for a manufactured object having a semi-cylindrical flow path in the related art.
[FIG. 13B] FIG. 13B is a diagram illustrating an actual manufacturing path for the manufactured object having a semi-cylindrical flow path in the related art.

### DESCRIPTION OF EMBODIMENTS

Hereinafter, embodiments according to the present invention will be described in detail with reference to the drawings. The additive manufacturing device shown here uses a heat source device to melt a filler metal (welding wire) held by a manipulator to form welding beads based on a predetermined manufacturing plan, and repeatedly deposits the formed welding beads into a desired shape, thereby building a manufactured object in which the plurality of welding beads are deposited. The control information generation device determines a manufacturing path for the welding beads when such an additive manufacturing device builds the manufactured object, and outputs a control signal for driving the additive manufacturing device.

### <Configuration of Additive Manufacturing Device>

A configuration example of an additive manufacturing device that is operated based on control information generated by the control information generation device will be described.

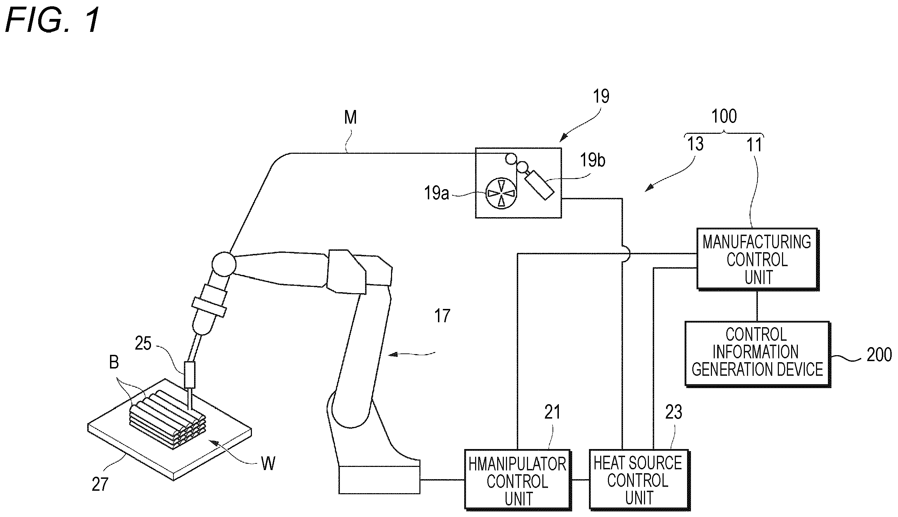

FIG. 1 is a schematic diagram illustrating an overall configuration of the additive manufacturing device. The additive manufacturing device 100 includes a manufacturing control unit 11 and a manufacturing unit 13. In addition, the control information generation device 200 may be connected to the manufacturing control unit 11 to constitute a part of the additive manufacturing device 100, may be provided separately from the additive manufacturing device 100, and may be connected to the manufacturing control unit 11 via communication such as a network or via a storage medium.

The manufacturing unit 13 includes a manipulator 17, a filler metal supply unit 19, a manipulator control unit 21, and a heat source control unit 23.

The manipulator control unit 21 controls the manipulator 17 and the heat source control unit 23. An operator can instruct any operation of the manipulator control unit 21 via a controller (not illustrated) connected to the manipulator control unit 21.

The manipulator 17 is, for example, an articulated robot, and a filler metal M is supported by a torch 25 provided on a tip end shaft of the manipulator 17 so as to be continuously supplied. The torch 25 holds the filler metal M in a state of protruding from a tip end thereof. A position and posture of the torch 25 can be freely set three-dimensionally within a range of degrees of freedom of a robot arm constituting the manipulator 17. The manipulator 17 preferably has six or more degrees of freedom, and is preferably capable of freely changing an axial direction of a heat source at a tip end thereof. The manipulator 17 may be in various forms, such as an articulated robot having four or more axes illustrated in FIG. 1 or a robot having angle adjustment mechanisms on two or more orthogonal axes.

The torch 25 includes a shield nozzle (not illustrated), and is supplied with shield gas from the shield nozzle. The shield gas blocks the atmosphere, prevents oxidation, nitridation, and the like of molten metal during welding, and reduces welding failures. An arc welding method used in this configuration may be any one of a consumable electrode type such as coated arc welding or carbon dioxide gas arc welding, and a non-consumable electrode type such as the Tungsten Inert Gas (TIG) welding or plasma arc welding, and is appropriately selected depending on an object to be built. Here, gas metal arc welding will be described as an example. In the case of the consumable electrode type, a contact tip is disposed inside the shield nozzle, and the filler metal M to which a current is supplied is held by the contact tip. The torch 25 generates an arc from a tip end of the filler metal M in a shield gas atmosphere while holding the filler metal M.

The filler metal supply unit 19 supplies the filler metal M toward the torch 25. The filler metal supply unit 19 includes a reel 19a around which the filler metal M is wound, and a feeding mechanism 19b that feeds the filler metal M from the reel 19a. The filler metal M is fed to the torch 25 while being fed forward or backward by the feeding mechanism 19b as necessary. The feeding mechanism 19b is not limited to a push type disposed on a filler metal supply unit 19 side to push out the filler metal M, and may be a pull type or a push-pull type disposed on the robot arm or the like.

The heat source control unit 23 is a welding power source that supplies electric power required for welding by the manipulator 17. The heat source control unit 23 adjusts a welding current and a welding voltage to be supplied at the time of forming beads by melting and solidifying the filler metal M. In addition, a filler metal feeding speed of the filler metal supply unit 19 is adjusted in conjunction with welding conditions such as the welding current and the welding voltage set by the heat source control unit 23.

A heat source for melting the filler metal M is not limited to the above-described arc. For example, a heat source using another method such as a heating method using both an arc and a laser, a heating method using plasma, or a heating method using an electron beam or a laser may be used. In the case of heating by an electron beam or a laser, a heating amount can be more finely controlled, and a state of a bead to be formed can be more appropriately maintained, thereby contributing to further improvement in quality of an additive structure. In addition, a material of the filler metal M is not particularly limited, and for example, types of the filler metal M to be used may be different according to properties of a manufactured object W such as mild steel, high-tensile steel, aluminum, aluminum alloy, nickel, and nickel-base alloy.

The manufacturing control unit 11 collectively controls the above-described units.

The additive manufacturing device 100 having the above-described configuration operates according to a manufacturing program created based on a manufacturing plan of the manufactured object W. The manufacturing program includes a large number of command codes, and is created based on an appropriate algorithm according to various conditions such as a shape, a material, and a heat input amount of the manufactured object. When the filler metal M to be fed is melted and solidified while moving the torch 25 according to the manufacturing program, linear welding beads B which are molten and solidified bodies of the filler metal M are formed on a base 27. That is, the manipulator control unit 21 drives the manipulator 17 and the heat source control unit 23 based on a predetermined program provided from the manufacturing control unit 11. The manipulator 17 forms the welding beads B by moving the torch 25 while melting the filler metal M with an arc, according to a command from the manipulator control unit 21. By sequentially forming and depositing the welding beads B in this manner, the manufactured object W having a desired shape can be obtained.

### <Configuration of Control Information Generation Device>

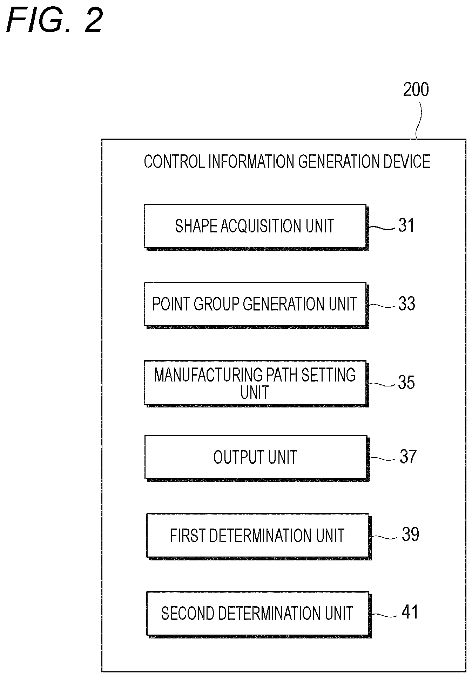

FIG. 2 is a functional block diagram of the control information generation device 200. The control information generation device 200 includes a shape acquisition unit 31, a point group generation unit 33, a manufacturing path setting unit 35, and an output unit 37. The control information generation device 200 further includes a first determination unit 39 and/or a second determination unit 41. The details of the units will be described later, and general functions are as follows.

The shape acquisition unit 31 acquires information on a three-dimensional shape to be built. The point group generation unit 33 generates a plurality of feature points along a specific direction in a layer in each of layered bodies obtained by dividing the acquired three-dimensional shape into a plurality of layers. The manufacturing path setting unit 35 couples the plurality of feature points generated in the same layered body to the plurality of feature points generated in another layered body adjacent to the layered body. Then, a line coupling the coupled feature points is set as a manufacturing path. That is, the plurality of feature points in the layer are coupled so as to connect the layered bodies, and the coupling line is set as the manufacturing path. The output unit 37 outputs control information including information on the set manufacturing path. The first determination unit 39 and the second determination unit 41 determine whether the coupling of the set manufacturing path has been established under different conditions. As described above, the coupling line is coupled along a surface of the manufactured object, and thus in a manufactured object having a curved surface, a manufacturing path matching the curved surface can also be obtained.

The control information output from the control information generation device 200 is output to, for example, the manufacturing control unit 11 illustrated in FIG. 1, and thus the manufacturing control unit 11 generates a manufacturing program based on the manufacturing plan updated to the newly set manufacturing path. The manufacturing control unit 11 controls the driving of the manufacturing unit 13 based on the manufacturing plan, and thus the manufactured object can be manufactured in a more appropriate and efficient procedure.

The control information generation device 200 is implemented by, for example, hardware using an information processing device such as a personal computer (PC). Each function of the control information generation device 200 is implemented by a control unit (not illustrated) reading and executing a program having a specific function stored in a storage device (not illustrated). Examples of the control unit include a processor such as a central processing unit (CPU) and a micro processor unit (MPU), or a dedicated circuit. Examples of the storage device include a memory such as random access memory (RAM) which is a volatile storage area and read only memory (ROM) which is a non-volatile storage area, and a storage such as hard disk drive (HDD) and solid state drive (SSD).

In addition to the above-described embodiment, the control information generation device 200 may be implemented by another computer that is connected to the manufacturing control unit 11 from a remote location via a network or the like, as described above.

Next, a procedure of generating control information by the control information generation device 200 will be described in detail.

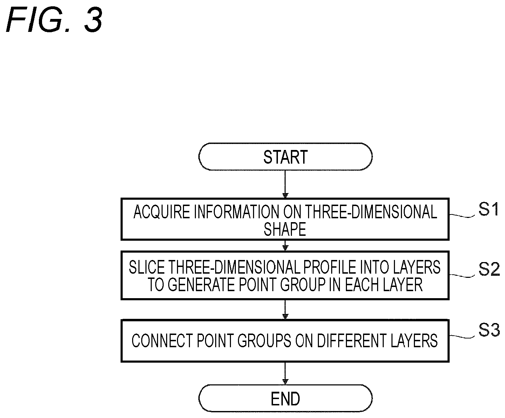

FIG. 3 is a flowchart illustrating the procedure of generating the control information. First, the shape acquisition unit 31 acquires information on a three-dimensional shape of a manufactured object to be built based on shape data such as CAD data (S1). The shape acquisition unit 31 outputs the information on the acquired three-dimensional shape to the point group generation unit 33. The point group generation unit 33 slices the input three-dimensional shape into layers to generate a point group in each layer (S2).

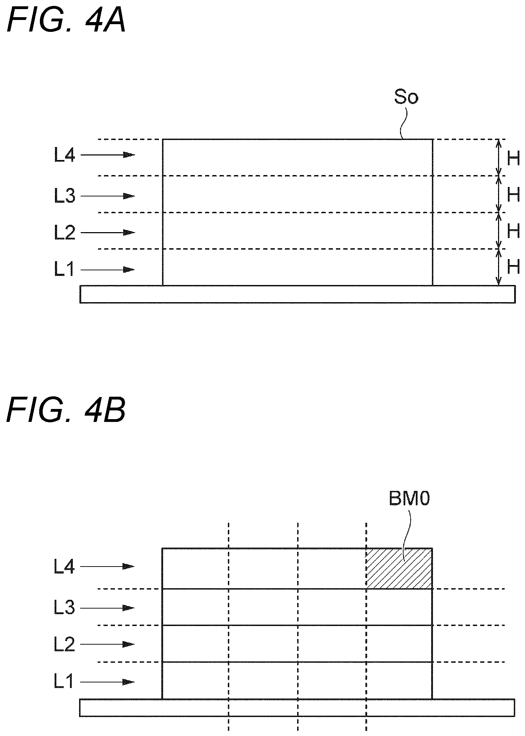

FIGS. 4A and 4B are diagrams illustrating a state in which the three-dimensional shape of the manufactured object is divided to generate bead models. As illustrated in FIG. 4A, a shape of the acquired manufactured object is set as a target shape So of the manufactured object to be manufactured, and the target shape So is sliced into a plurality of layers L1, L2, L3, and L4 according to a bead height H of predetermined welding beads. The number of layers to be divided, a division direction, and the bead height can be freely set. A specific method for dividing the target shape So is not particularly limited, and a known means can be adopted. Here, the target shape So is divided into a plurality of layers in a vertical direction, and as illustrated in FIG. 13B, the target shape So may be divided along a longitudinal direction of the target shape So.

As illustrated in FIG. 4B, the divided layers L1, L2, L3, and L4 are divided into a plurality of rectangular bead models BM0 so as to correspond to a cross-sectional shape of the welding beads. Accordingly, the layers L1, L2, L3, and L4 are divided into the plurality of rectangular bead models BM0. During the division of the rectangular bead models BM0, conditions may be specified such that a bead cross-sectional area is made constant in a cross section orthogonal to the bead longitudinal direction for each rectangular bead model BM0.

Next, the plurality of divided rectangular bead models BM0 are applied to a simple geometric figure such as a trapezoidal shape, a polygonal shape, and a semicircular shape, and a target position of the welding beads is obtained based on the geometric figure to obtain a movement trajectory of the torch. Accordingly, a path for additively manufacturing the manufactured object with the welding beads is determined.

The above-described basic path setting procedure can be suitably applied to the manufactured object W having a shape extending in the vertical direction on the base 27 as illustrated in FIG. 1. However, for example, in a case in which the target shape So is an elongated shape extending long in a horizontal direction illustrated in FIG. 13A, when the target shape So is divided into the layers in the vertical direction, an area of each layer increases, and processing of dividing each layer into bead models becomes complicated. Therefore, as illustrated in FIG. 13B, it is preferable to divide the target shape So into layers in a direction orthogonal to the horizontal direction to reduce the area of each layer, and a length of the welding beads in each divided layer becomes short. As a result, it is necessary to frequently and intermittently form beads, which does not necessarily result in an efficient manufacturing procedure.

For this reason, in the control information generation device 200 of the present configuration, the target shape So is first divided into layers having a small area, and is temporarily divided into bead models in each layer. Then, feature points of the bead models on each layer are extracted, and the feature points are coupled in the division direction of each layer. If the coupling line of the feature points obtained in this manner is set as a path for forming welding beads, that is, a path for building the target shape So, a path along the longitudinal direction of the target shape So is easily obtained.

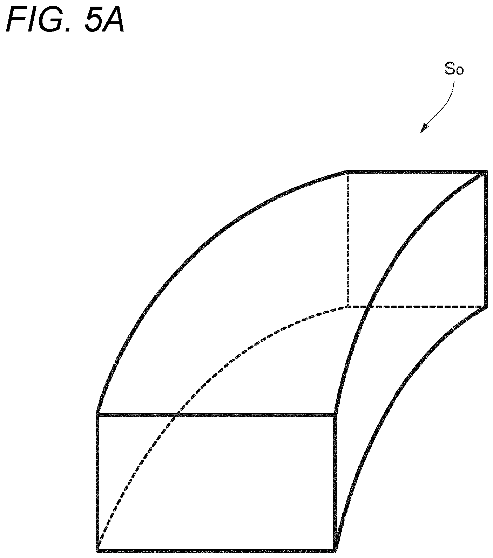

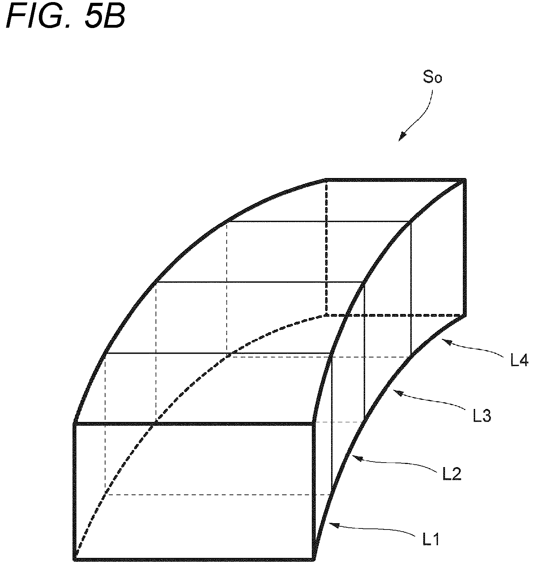

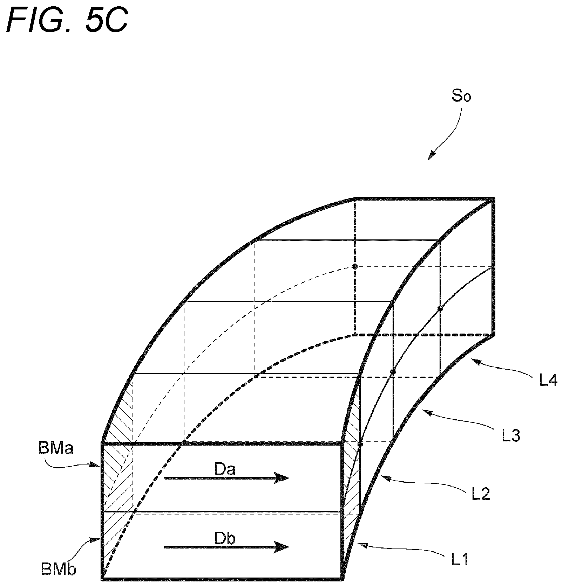

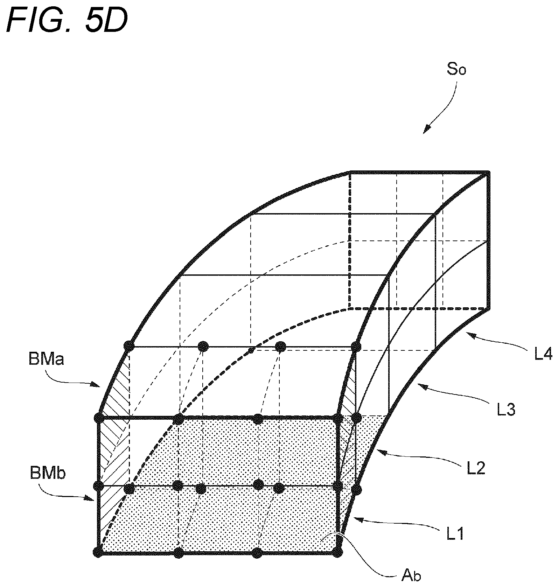

FIGS. 5A and 5D are diagrams illustrating, in a stepwise manner, a procedure of dividing the elongated target shape So into layers to generate a plurality of feature points and coupling the feature points in the division direction of each layer. As illustrated in FIG. 5A, it is assumed that the target shape So is an elongated shape that continues from a front side toward a back side. As illustrated in FIG. 5B, the target shape So is divided into a plurality of layered bodies along the longitudinal direction of the target shape So. Here, an example of dividing the target shape So into the layers L1, L2, L3, and L4 is shown as an example. As illustrated in FIG. 5C, each of the divided layers is further divided into a plurality of bead models. Here, each of the divided layers is divided into two bead models BMa and BMb. In each of the bead models BMa and BMb, Da and Db indicated by arrows are bead formation directions, and a bead cross section orthogonal to the bead formation direction is approximated by a hatched region illustrated in FIG. 5C.

Next, as illustrated in FIG. 5D, a plurality of feature points are generated along the bead formation directions Da and Db for the bead model BMa and the bead model BMb. Here, the feature points are generated at vertices obtained by equally dividing the model into three along the bead formation direction. Although not illustrated, a plurality of feature points are similarly generated for the layers L2 to L4

As described above, the point group generation unit 33 generates the point group including the plurality of feature points along the specific direction (bead formation direction Db). Next, the manufacturing path setting unit 35 reconnects the coupling line of the feature points to a direction along the plurality of layers L1, L2, L3, and L4, that is, the division direction of the bead models.

Here, to simplify the description, the path recombination will be described by focusing on the layer L1 and the layer L2

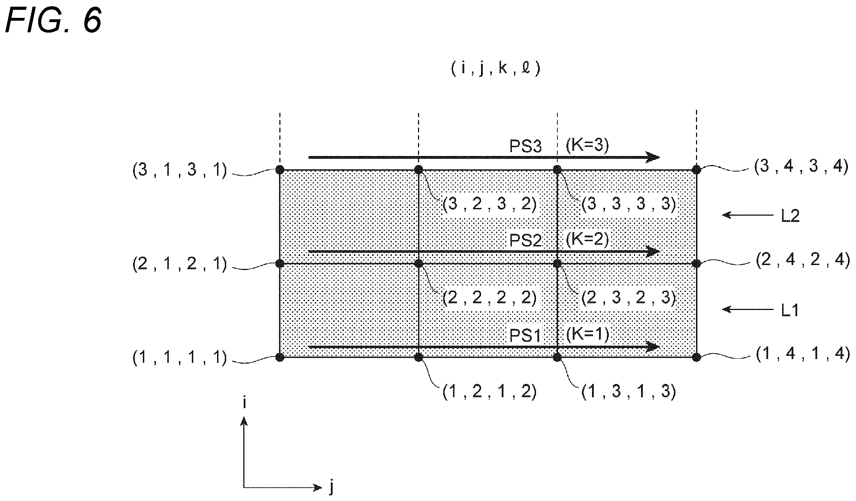

FIG. 6 is a diagram illustrating bottom surface regions Ab indicated by dot hatching in FIG. 5D in a plan view. In FIG. 6, each feature point is regarded as a point on grid coordinates, and each intersection point on grid lines is represented using an index specified by (i, j, k, 1). Here, the indices i and j are indices representing coordinates in the bottom surface regions Ab, the index k is an index (second index) representing a depositing order of a plurality of rows of bead models, and the index 1 is an index (first index) representing a time-series order in which the torch passes from a time point of starting the depositing of one bead model to a time point of ending the depositing operation.

That is, a point (1, 1, 1, 1) is a feature point of a left end corner portion in the bead model BMb on the layer L1. A point (1, 2, 1, 2) is a feature point located on the right side by one from the left end corner portion in the bead model BMb on the layer L1. A point (2, 1, 2, 1) is a feature point of the left end corner portion in a bead model on the layer L2.

As described above, the index i represents a position in a vertical direction in FIG. 6, and the index j represents a position in a horizontal direction in FIG. 6. The feature points having the same index k are feature points provided in the same bead model, that is, feature points on the same path. The index 1 represents a depositing order along a traveling direction of a path having the same index k.

Therefore, in FIG. 6, feature points (1, 1, 1, 1), (1, 2, 1, 2), (1, 3, 1, 3), and (1, 4, 1, 4) on the layer L1 are arranged in this order, and a coupling line coupling the feature points in this order forms a path PS1. Similarly, a coupling line coupling feature points (2, 1, 2, 1), (2, 2, 2, 2), (2, 3, 2, 3), and (2, 4, 2, 4) arranged in order on the layer L2 forms a path PS2. Similarly, a coupling line coupling feature points (3, 1, 3, 1), (3, 2, 3, 2), (3, 3, 3, 3), and (3, 4, 3, 4) forms a path PS3. Each of the paths PS1, PS2, and PS3 is a direction along the bead formation direction Db illustrated in FIG. 5C, and is a direction orthogonal to the longitudinal direction of the target shape So (arrangement direction of the index i).

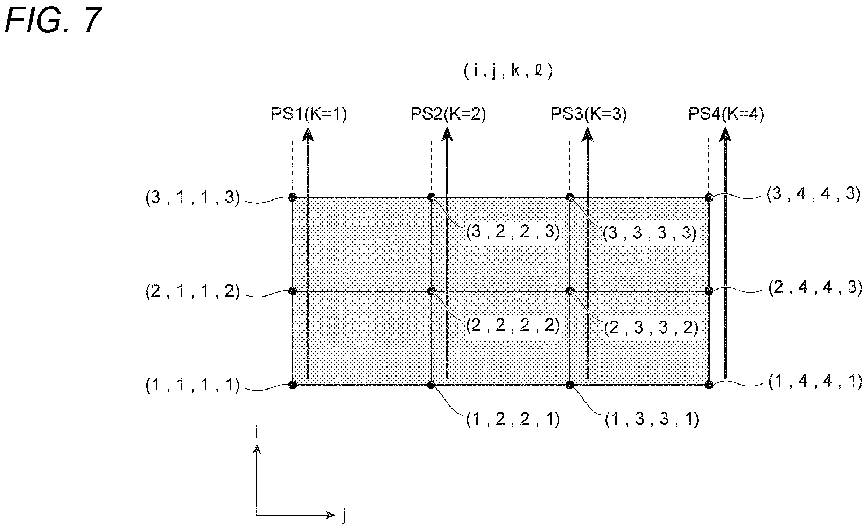

FIG. 7 is a diagram illustrating a state in which the point group of the feature points illustrated in FIG. 6 is reconnected from a direction (bead formation direction Db) along the layer to the division direction of each layer to generate new paths. Here, values of the index k and the index 1 of the feature points of each unit model are exchanged. In this case, the feature points having the same index k are feature points on the same path, and the index 1 represents the depositing order along the traveling direction of the path having the same index k. Therefore, the path PS1 of the index k = 1, the path PS2 of the index k = 2, the path PS3 of the index k = 3, and a path PS4 of the index k = 4 are new paths along the longitudinal direction of the target shape So (arrangement direction of the index i). That is, the new paths are generated by coupling the point groups on different layers (S3).

By replacing the index k and the index 1 as described above and coupling the feature points based on the updated k and 1, a line along the division direction of the layered body (layers L1, L2, L3, and L4) divided into a plurality of layers is generated. The line is set as a new path.

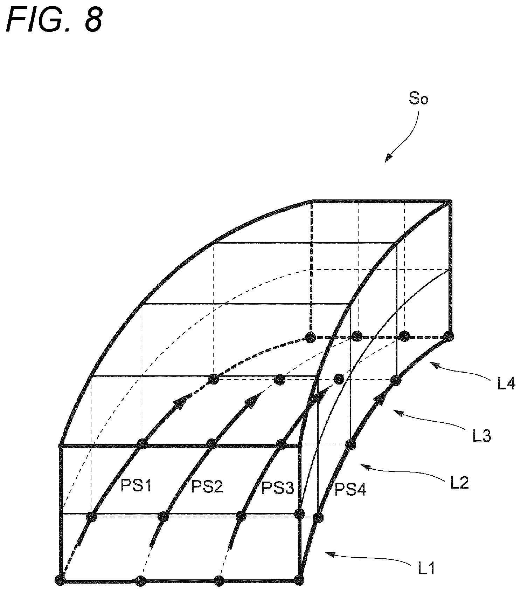

FIG. 8 is a diagram illustrating the generated new paths in association with FIG. 5C. The paths PS1 to PS4 illustrated in FIG. 8 are all paths along the division direction of the above-described layers intersecting the bead formation directions Da and Db illustrated in FIG. 5C. When the welding beads are formed along the paths PS1 to PS4 shown here, the formed welding beads are on a lowermost layer on which the target shape So is built. Then, by further forming (depositing) welding beads on the lowermost bead layer in the same manner, a manufactured object having the target shape So can be efficiently manufactured.

As described above, the original paths illustrated in FIG. 6 can be easily changed to paths intersecting the original paths as illustrated in FIG. 7 without a complicated calculation. Therefore, there is no need for a special operation of slicing the target shape So finely or slicing the target shape So while changing the division direction, and it is sufficient to simply change and reconnect coupling partners of the feature points.

The feature points shown here are merely examples, and are not limited thereto. For example, a geometrically feature point, such as a vertex that is a corner portion existing in the set path, may be set as the feature point. The number of feature points may be adjusted according to the area or the like of each layer, or may be adjusted according to a path length. The index assigned to each feature point may be used to count the number of feature points generated in each layer. The index may be used not only to identify each feature point in the layer, but also to separately identify order information for moving the torch along the path, the connection between the paths, and the like.

Further, instead of determining a coupling direction of the feature points based on the indices k and 1, the indices i and j themselves may be used as indices for setting the paths. In this case, only two indices i and j are needed for each feature point. A distance between the feature points on different layers may be calculated, and a set having a minimum sum thereof may be set as a connection destination of the feature points. For example, when a distance between adjacent feature points is shorter in an arrangement direction of the index j than in the arrangement direction of the index i, the feature points are coupled along the arrangement direction of the index j. For example, when the manufactured object has a curved surface, a smooth path along the curved surface can also be generated by performing the above-described processing.

The control information including the information on the generated new paths is output from the output unit 37 to the manufacturing control unit 11 and the like illustrated in FIG. 1. The manufacturing control unit 11 creates an additive plan for building the manufactured object in the path along the longitudinal direction thereof based on the information on the new paths. Accordingly, the manufacturing control unit 11 can drive the manufacturing unit 13 to build a manufactured object having a desired shape with high efficiency.

A step of determining whether the feature points are appropriately coupled is performed for the path generated by reconnecting the feature points.

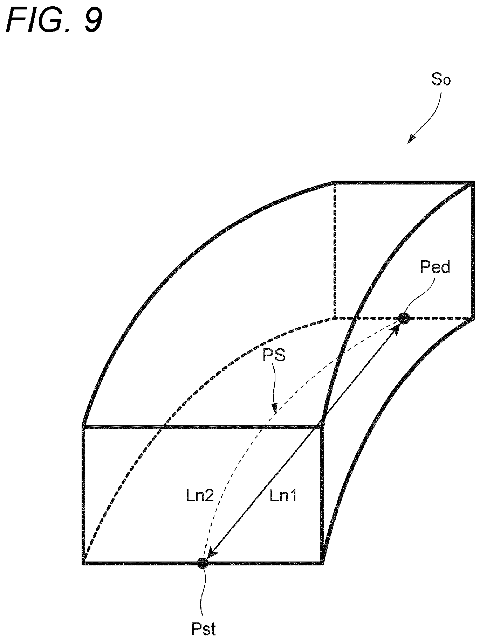

FIG. 9 is a diagram illustrating a determination method for determining whether the generated path is appropriate. For example, when the path PS is generated along the longitudinal direction of the target shape So by the manufacturing path setting unit 35, a path length of the path PS is Ln1, and a length of a straight line coupling a start point Pₛₜ and an end point P_{ed} of the path PS is Ln2. When the distance Ln1 is shorter than the distance Ln2, the first determination unit 39 illustrated in FIG. 2 determines that breakage occurs in the middle of the path PS. Further, when the distance Ln1 is longer than the distance Ln2 by a predetermined difference or more, it is determined that the path PS is not smoothly connected and the combination of the connected feature points is inappropriate. That is, the first determination unit 39 calculates the path length of the path set by the manufacturing path setting unit 35, and determines whether the feature points are coupled based on the path length.

When the first determination unit 39 determines that the coupling between the feature points is inappropriate, the manufacturing path setting unit 35 recombines the coupling between the feature points by appropriately changing conditions. The processing is repeated until the coupling becomes appropriate. Accordingly, it is possible to mechanically determine whether the coupling has been established, and it is not necessary to check the coupling more finely by hand.

Instead of the first determination unit 39 or in parallel with the first determination unit 39, the second determination unit 41 determines whether the coupling has been established. The second determination unit 41 calculates a curvature distribution of the path set by the manufacturing path setting unit 35, and determines whether the feature points are coupled based on the curvature distribution.

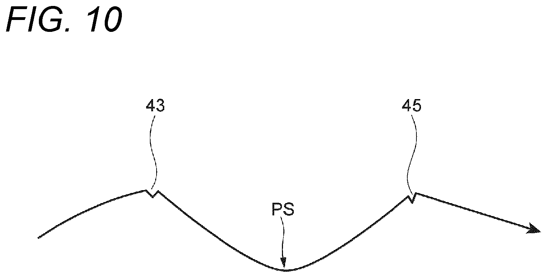

FIG. 10 is a diagram schematically illustrating the generated path PS in a plan view. A part of the path PS has discontinuous irregularities 43 and 45. Such local irregularities 43 and 45, or paths meandering in a short section, or paths having an irregular shape are likely to cause a defect shape and are not suitable for depositing the welding beads. Therefore, it is desirable to correct such paths.

Therefore, the second determination unit 41 obtains the distribution of the curvature along the path PS and compares a slope of the curvature with a predetermined threshold value. A specific method for obtaining a curvature distribution of the path PS is known, and thus a detailed description thereof is omitted here. When the slope exceeds the threshold value, it is determined that the reconnected path is not smooth and is not appropriately connected, for example, the path vibrates. The determination may be based not only on the slope of the curvature but on also the number of maximum and minimum values in the curvature distribution, for example. For the number of maximum and minimum peaks, appropriate threshold values may be set based on an outer surface shape of the manufactured object, experience, or the like, and the success or failure of coupling may be determined by comparing the number of maximum and minimum peaks with the threshold values.

In the determination based on the curvature distribution, it is possible to more accurately reflect the shape of the path.

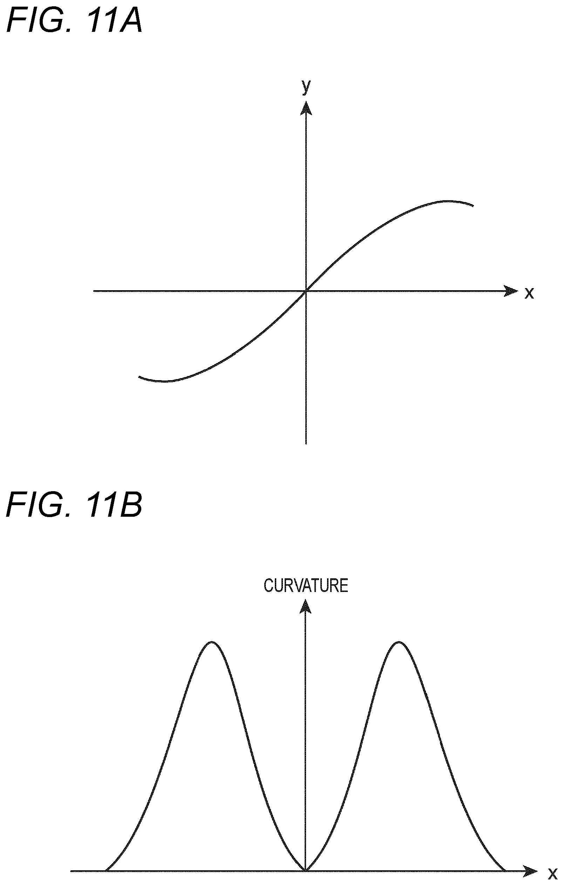

FIG. 11A is a graph illustrating a curve according to a sine function in an x-y plane. FIG. 11B is a graph illustrating a curvature distribution of the sine curve in FIG. 11A. As shown by the curvature distribution in FIG. 11B, in a simple curve, a shape having the maximum value and the minimum value also appears as a remarkable feature.

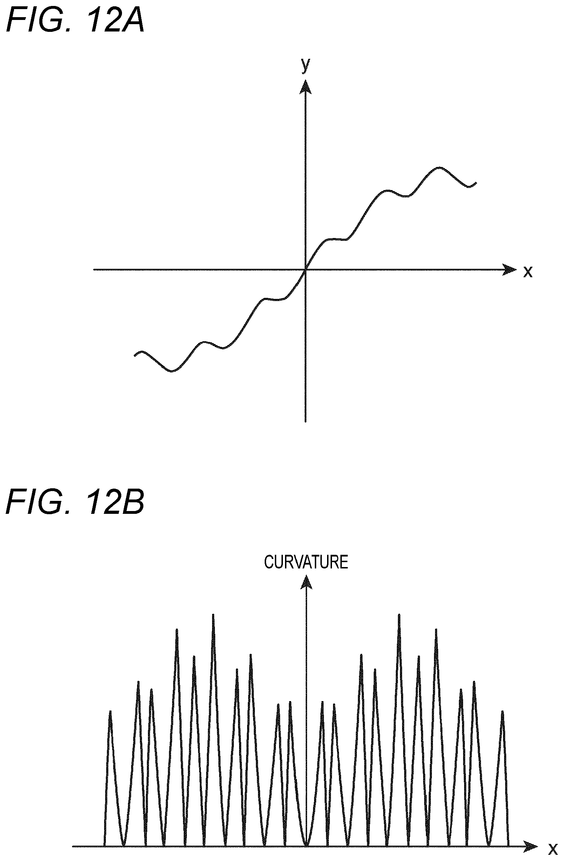

FIG. 12A is a graph illustrating a result of adding together sine functions having different periods and amplitudes. FIG. 12B is a graph illustrating a curvature distribution of the curve illustrated in FIG. 12A. As shown by the curvature distribution in FIG. 12B, when the curve includes minute irregularities, the irregularities cause the curvature to fluctuate significantly.

As described above, in the determination based on the curvature distribution, a smaller shape change can be easily detected as compared with a case in which the shape of the path PS is directly evaluated, and thus it is possible to reliably extract a meandering phenomenon, vibration, torsion, and the like of the path and improve determination accuracy.

As described above, the present invention is not limited to the above-described embodiments, and combinations of the respective configurations of the embodiments and changes and applications made by those skilled in the art based on the description of the specification and well-known techniques are also intended for the present invention and are included in the scope of protection.

As described above, the present specification discloses the following matters.

According to the control information generation device, the acquired three-dimensional shape of the manufactured object is divided into the plurality of layers, and the plurality of feature points are generated along the specific direction in the layer in the obtained layered body. Next, the plurality of feature points of the adjacent layered bodies are coupled to one another, and the coupling line is set as the manufacturing path. Accordingly, even for the manufactured object extending in one direction, the manufacturing path is set along a longitudinal direction of the manufactured object. Accordingly, the additive manufacturing device can be controlled so as to perform efficient additive manufacturing by preventing an increase in the number of layers and the number of paths regardless of the shape of the manufactured object.

According to the control information generation device, the reconnection can be mechanically performed by simple processing of coupling the feature points having the same first index in the order of the second index.

According to the control information generation device, the specific direction is the longitudinal direction of the welding bead assumed when the layered body is divided into the shapes of the welding beads, and thus the line connected along the division direction of the layered body becomes the longitudinal direction of the manufactured object extending in one direction. Accordingly, the manufacturing path on which the welding beads are formed along the longitudinal direction of the manufactured object extending in one direction is required.

Since the control information generation devic includes according to the present invention a first determination unit configured to calculate a path length of the manufacturing path set by the manufacturing path setting unit and determine whether the feature points are coupled based on the path length, the coupling of other feature points can be recombined when the combination of the connected feature points is inappropriate.

Since the control information generation device includes according to the present invention a second determination unit configured to calculate a curvature distribution of the manufacturing path set by the manufacturing path setting unit and determine whether the feature points are coupled based on the curvature distribution, the coupling of the other feature points can be recombined when the combination of the connected feature points is inappropriate for the depositing of the welding beads.

According to the control information generation method, the acquired three-dimensional shape of the manufactured object is divided into the plurality of layers, and the plurality of feature points are generated along the specific direction in the layer in the obtained layered body. Next, the plurality of feature points of the adjacent layered bodies are coupled to one another, and the coupling line is set as the manufacturing path. Accordingly, even for the manufactured object extending in one direction, the manufacturing path is set along a longitudinal direction of the manufactured object. Accordingly, the additive manufacturing device can be controlled so as to perform efficient additive manufacturing by preventing an increase in the number of layers and the number of paths regardless of the shape of the manufactured object.

According to the control information generation method, the reconnection can be mechanically performed by simple processing of coupling the feature points having the same first index in the order of the second index.

According to the control information generation method, the specific direction is the longitudinal direction of the welding bead assumed when the layered body is divided into the shapes of the welding beads, and thus the line connected along the division direction of the layered body becomes the longitudinal direction of the manufactured object extending in one direction. Accordingly, the manufacturing path on which the welding beads are formed along the longitudinal direction of the manufactured object extending in one direction is required.

Since the control information generation method includes according to the present invention calculating a path length of the manufacturing path and determining whether the feature points are coupled based on the path length, the coupling of other feature points can be recombined when the combination of the connected feature points is inappropriate.

Since the control information generation method includes according to the present invention calculating a curvature distribution of the manufacturing path and determining whether the feature points are coupled based on the curvature distribution, the coupling of the other feature points can be recombined when the combination of the connected feature points is inappropriate for the depositing of the welding beads.

According to the program, the acquired three-dimensional shape of the manufactured object is divided into the plurality of layers, and the plurality of feature points are generated along the specific direction in the layer in the obtained layered body. Next, the plurality of feature points of the adjacent layered bodies are coupled to one another, and the coupling line is set as the manufacturing path. Accordingly, even for the manufactured object extending in one direction, the manufacturing path is set along a longitudinal direction of the manufactured object. Accordingly, the additive manufacturing device can be controlled so as to perform efficient additive manufacturing by preventing an increase in the number of layers and the number of paths regardless of the shape of the manufactured object.

According to the program, the reconnection can be mechanically performed by simple processing of coupling the feature points having the same first index in the order of the second index.

According to the program, the specific direction is the longitudinal direction of the welding bead assumed when the layered body is further divided into the shapes of the welding beads, and thus the line connected along the division direction of the layered body becomes the longitudinal direction of the manufactured object extending in one direction. Accordingly, the manufacturing path on which the welding beads are formed along the longitudinal direction of the manufactured object extending in one direction is required.

Since the program causes according to the present invention the computer to execute a procedure of calculating a path length of the manufacturing path and determining whether the feature points are coupled based on the path length, the coupling of other feature points can be recombined when the combination of the connected feature points is inappropriate, the coupling of other feature points can be recombined.

Since the program causes according to the present invention the computer to execute a procedure of calculating a curvature distribution of the manufacturing path and determining whether the feature points are coupled based on the curvature distribution, the coupling of the other feature points can be recombined when the combination of the connected feature points is inappropriate for the depositing of the welding beads.

### REFERENCE SIGNS LIST

11: manufacturing control unit
13: manufacturing unit
17: manipulator
19: filler metal supply unit
19a: reel
19b: feeding mechanism
21: manipulator control unit
23: heat source control unit
25: torch
27: base
31: shape acquisition unit
33: point group generation unit
35: manufacturing path setting unit
37: output unit
39: first determination unit
41: second determination unit
43, 45: irregularity
100: additive manufacturing device
200: control information generation device
Ab: bottom surface region
B: welding bead
BM0: rectangular bead model
BMa, BMb: bead model
Da, Db: bead formation direction
H: bead height
L1, L2, L3, L4: layer
Ln1, Ln2: distance
M: filler metal
PS, PS1, PS2, PS3, PS4: path
Pₛₜ: start point
P_{ed}: end point
So: target shape
W: manufactured object

## Claims

1. A control information generation device (200) for generating control information for controlling an additive manufacturing device (100) that builds layer shapes using welding beads (B) formed by adding a molten processing material to a surface to be processed while moving a processing position along a manufacturing path, and builds a three-dimensional manufactured object (W) by depositing the layer shapes, the control information generation device (200) comprising:
a shape acquisition unit (31) configured to acquire information on the three-dimensional shape of the manufactured object (W);
the control information generation device (200) being **characterised by**:
a point group generation unit (33) configured to generate a plurality of feature points along a specific direction in the layer in each of layered bodies obtained by dividing the three-dimensional shape into a plurality of layers;
a manufacturing path setting unit (35) configured to couple the plurality of feature points generated in the same layered body to the plurality of feature points generated in another layered body adjacent to the layered body, and set a line coupling the coupled feature points as the manufacturing path;
an output unit (37) configured to output the control information including information on the set manufacturing path; and
wherein the control information generation device (200) further comprises:
a first determination unit (39) configured to calculate a path length of the manufacturing path set by the manufacturing path setting unit (35) and determine whether the feature points are coupled based on the path length; and/or
a second determination unit (41) configured to calculate a curvature distribution of the manufacturing path set by the manufacturing path setting unit (35) and determine whether the feature points are coupled based on the curvature distribution.

2. The control information generation device according to claim 1, wherein the manufacturing path setting unit (35) is configured to
assign independent first indexes to the plurality of feature points in order along the specific direction in the layered body, and assign independent second indexes to the plurality of feature points in order along a division direction of the plurality of layered bodies, and
set, as the manufacturing path, a line coupling the feature points having the same assigned first index among the plurality of feature points in the order of the second index.

3. The control information generation device according to claim 1, wherein
the specific direction is a longitudinal direction of the welding bead when it is assumed that a shape of each of the layered bodies is formed by one welding bead or a plurality of the welding beads (B).

4. A control information generation method for generating control information for controlling an additive manufacturing device (100) that builds layer shapes using welding beads (B) formed by adding a molten processing material to a surface to be processed while moving a processing position along a manufacturing path, and builds a three-dimensional manufactured object (W) by depositing the layer shapes, the control information generation method comprising:
acquiring (S1) information on the three-dimensional shape of the manufactured object (W);
the control information generation method being **characterised by**:
generating a plurality of feature points along a specific direction in the layer in each of layered bodies obtained by dividing the three-dimensional shape into a plurality of layers;
coupling the plurality of feature points generated in the same layered body to the plurality of feature points generated in another layered body adjacent to the layered body, and setting a line coupling the coupled feature points as the manufacturing path;
outputting the control information including information on the set manufacturing path; and
wherein the control information generation method further comprises:
calculating a path length of the set manufacturing path and determining whether the feature points are coupled based on the path length; and/or
calculating a curvature distribution of the set manufacturing path and determining whether the feature points are coupled based on the curvature distribution.

5. The control information generation method according to claim 4, wherein
the setting of the manufacturing path includes
assigning independent first indexes to the plurality of feature points in order along the specific direction in the layered body, and assigning independent second indexes to the plurality of feature points in order along a division direction of the plurality of layered bodies, and
setting, as the manufacturing path, a line coupling the feature points having the same assigned first index among the plurality of feature points in the order of the second index.

6. The control information generation method according to claim 4, wherein
the specific direction is a longitudinal direction of the welding bead when it is assumed that a shape of each of the layered bodies is formed by one welding bead or a plurality of the welding beads (B).

7. A program for generating control information for controlling an additive manufacturing device (100) that builds layer shapes using welding beads (B) formed by adding a molten processing material to a surface to be processed while moving a processing position along a manufacturing path, and builds a three-dimensional manufactured object (W) by depositing the layer shapes, the program causing a computer to execute:
a procedure of acquiring (S1) information on the three-dimensional shape of the manufactured object (W);
the program being **characterised by**:
a procedure of generating a plurality of feature points along a specific direction in the layer in each of layered bodies obtained by dividing the three-dimensional shape into a plurality of layers;
a procedure of coupling the plurality of feature points generated in the same layered body to the plurality of feature points generated in another layered body adjacent to the layered body, and setting a line coupling the coupled feature points as the manufacturing path;
a procedure of outputting the control information including information on the set manufacturing path; and
wherein the program further causes the computer to execute:
a procedure of calculating a path length of the manufacturing path and determining whether the feature points are coupled based on the path length; and/or
a procedure of calculating a curvature distribution of the manufacturing path and determining whether the feature points are coupled based on the curvature distribution.

8. The program according to claim 7, wherein the procedure of setting the manufacturing path includes
assigning independent first indexes to the plurality of feature points in order along the specific direction in the layered body, and assigning independent second indexes to the plurality of feature points in order along a division direction of the plurality of layered bodies, and
setting, as the manufacturing path, a line coupling the feature points having the same assigned first index among the plurality of feature points in the order of the second index.

9. The program according to claim 7, wherein the specific direction is a longitudinal direction of the welding bead when it is assumed that a shape of each of the layered bodies is formed by one welding bead or a plurality of the welding beads (B).

## Patentansprüche

1. Steuerungs- bzw. Regelungsinformationserzeugungsvorrichtung (200) zum Erzeugen von Steuerungs- bzw. Regelungsinformationen zum Steuern bzw. Regeln einer Vorrichtung (100) zur additiven Fertigung, die Schichtformen unter Verwendung von Schweißraupen (B) erstellt, die durch Hinzufügen eines geschmolzenen Bearbeitungsmaterials zu einer zu bearbeitenden Fläche bzw. Oberfläche während einer Bewegung einer Bearbeitungsposition entlang eines Fertigungspfads gebildet werden, und ein dreidimensionales gefertigtes Objekt (W) durch Abscheiden bzw. Ablagern der Schichtformen erstellt, wobei die Steuerungs- bzw. Regelungsinformationserzeugungsvorrichtung (200) umfasst:
eine Formerfassungseinheit (31), die konfiguriert ist, Informationen über die dreidimensionale Form des gefertigten Objekts (W) zu erfassen;
wobei die Steuerungs- bzw. Regelungsinformationserzeugungsvorrichtung (200) **gekennzeichnet ist durch**:
eine Punktgruppenerzeugungseinheit (33), die konfiguriert ist, eine Mehrzahl von Merkmalspunkten entlang einer spezifischen Richtung in der Schicht in jedem der Schichtkörper zu erzeugen, die **durch** Teilen der dreidimensionalen Form in eine Mehrzahl von Schichten erhalten werden;
eine Fertigungspfadfestlegungseinheit (35), die konfiguriert ist, die in demselben Schichtkörper erzeugte Mehrzahl von Merkmalspunkten mit der in einem anderen Schichtkörper, der an diesen Schichtkörper angrenzt bzw. benachbart dazu ist, erzeugten Mehrzahl von Merkmalspunkten zu koppeln und eine Linie, welche die gekoppelten Merkmalspunkte koppelt, als den Fertigungspfad festzulegen;
eine Ausgabeeinheit (37), die konfiguriert ist, die Steuerungs- bzw. Regelungsinformationen auszugeben, die Informationen über den festgelegten Fertigungspfad beinhalten; und
wobei die Steuerungs- bzw. Regelungsinformationserzeugungsvorrichtung (200) ferner umfasst:
eine erste Bestimmungseinheit (39), die konfiguriert ist, eine Pfadlänge des durch die Fertigungspfadfestlegungseinheit (35) festgelegten Fertigungspfads zu berechnen und basierend auf der Pfadlänge zu bestimmen, ob die Merkmalspunkte gekoppelt sind; und/oder
eine zweite Bestimmungseinheit (41), die konfiguriert ist, eine Krümmungsverteilung des **durch** die Fertigungspfadfestlegungseinheit (35) festgelegten Fertigungspfads zu berechnen und basierend auf der Krümmungsverteilung zu bestimmen, ob die Merkmalspunkte gekoppelt sind.

2. Steuerungs- bzw. Regelungsinformationserzeugungsvorrichtung nach Anspruch 1, wobei die Fertigungspfadfestlegungseinheit (35) konfiguriert ist zum
Zuordnen von unabhängigen ersten Indizes zu der Mehrzahl von Merkmalspunkten in der Reihenfolge entlang der spezifischen Richtung in dem Schichtkörper und Zuordnen von unabhängigen zweiten Indizes zu der Mehrzahl von Merkmalspunkten in der Reihenfolge entlang einer Teilungsrichtung der Mehrzahl von Schichtkörpern, und
Festlegen, als der Fertigungspfad, einer Linie, welche die Merkmalspunkte mit demselben zugeordneten ersten Index unter der Mehrzahl von Merkmalspunkten in der Reihenfolge des zweiten Index koppelt.

3. Steuerungs- bzw. Regelungsinformationserzeugungsvorrichtung nach Anspruch 1, wobei
die spezifische Richtung eine Längsrichtung der Schweißraupe ist, wenn angenommen wird, dass eine Form jedes der Schichtkörper durch eine Schweißraupe oder eine Mehrzahl der Schweißraupen (B) gebildet wird.

4. Steuerungs- bzw. Regelungsinformationserzeugungsverfahren zur Erzeugung von Steuerungs- bzw. Regelungsinformationen zum Steuern bzw. Regeln einer Vorrichtung (100) zur additiven Fertigung, die Schichtformen unter Verwendung von Schweißraupen (B) erstellt, die durch Hinzufügen eines geschmolzenen Bearbeitungsmaterials zu einer zu bearbeitenden Fläche bzw. Oberfläche während einer Bewegung einer Bearbeitungsposition entlang eines Fertigungspfads gebildet werden, und ein dreidimensionales gefertigtes Objekt (W) durch Abscheiden bzw. Ablagern der Schichtformen erstellt, wobei das Steuerungs- bzw. Regelungsinformationserzeugungsverfahren umfasst:
Erfassen (S1) von Informationen über die dreidimensionale Form des gefertigten Objekts (W);
wobei das Steuerungs- bzw. Regelungsinformationserzeugungsverfahren **gekennzeichnet ist durch**:
Erzeugen einer Mehrzahl von Merkmalspunkten entlang einer spezifischen Richtung in der Schicht in jedem der Schichtkörper, die **durch** Teilen der dreidimensionalen Form in eine Mehrzahl von Schichten erhalten werden;
Koppeln der in demselben Schichtkörper erzeugten Mehrzahl von Merkmalspunkten mit der in einem anderen Schichtkörper, der an diesen Schichtkörper angrenzt bzw. benachbart dazu ist, erzeugten Mehrzahl von Merkmalspunkten und Festlegen einer Linie, welche die gekoppelten Merkmalspunkte koppelt, als den Fertigungspfad;
Ausgeben der Steuerungs- bzw. Regelungsinformationen, die Informationen über den festgelegten Fertigungspfad beinhalten; und
wobei das Steuerungs- bzw. Regelungsinformationserzeugungsverfahren ferner umfasst:
Berechnen einer Pfadlänge des festgelegten Fertigungspfads und Bestimmen, ob die Merkmalspunkte gekoppelt sind, basierend auf der Pfadlänge; und/oder
Berechnen einer Krümmungsverteilung des festgelegten Fertigungspfads und Bestimmen, ob die Merkmalspunkte gekoppelt sind, basierend auf der Krümmungsverteilung.

5. Steuerungs- bzw. Regelungsinformationserzeugungsverfahren nach Anspruch 4, wobei
das Festlegen des Fertigungspfads beinhaltet:
Zuordnen von unabhängigen ersten Indizes zu der Mehrzahl von Merkmalspunkten in der Reihenfolge entlang der spezifischen Richtung in dem Schichtkörper und Zuordnen von unabhängigen zweiten Indizes zu der Mehrzahl von Merkmalspunkten in der Reihenfolge entlang einer Teilungsrichtung der Mehrzahl von Schichtkörpern, und
Festlegen, als den Fertigungspfad, einer Linie, welche die Merkmalspunkte mit demselben zugeordneten ersten Index unter der Mehrzahl von Merkmalspunkten in der Reihenfolge des zweiten Index koppelt.

6. Steuerungs- bzw. Regelungsinformationserzeugungsverfahren nach Anspruch 4, wobei
die spezifische Richtung eine Längsrichtung der Schweißraupe ist, wenn angenommen wird, dass eine Form jedes der Schichtkörper durch eine Schweißraupe oder eine Mehrzahl der Schweißraupen (B) gebildet wird.

7. Programm zur Erzeugung von Steuerungs- bzw. Regelungsinformationen zum Steuern bzw. Regeln einer Vorrichtung (100) zur additiven Fertigung, die Schichtformen unter Verwendung von Schweißraupen (B) erstellt, die durch Hinzufügen eines geschmolzenen Bearbeitungsmaterials zu einer zu bearbeitenden Fläche bzw. Oberfläche während einer Bewegung einer Bearbeitungsposition entlang eines Fertigungspfads gebildet werden, und ein dreidimensionales gefertigtes Objekt (W) durch Abscheiden bzw. Ablagern der Schichtformen erstellt, wobei das Programm einen Computer veranlasst, auszuführen:
einen Vorgang des Erfassens (S1) von Informationen über die dreidimensionale Form des gefertigten Objekts (W);
wobei das Programm **gekennzeichnet ist durch**:
einen Vorgang des Erzeugens einer Mehrzahl von Merkmalspunkten entlang einer spezifischen Richtung in der Schicht in jedem der Schichtkörper, die **durch** Teilen der dreidimensionalen Form in eine Mehrzahl von Schichten erhalten werden;
einen Vorgang des Koppelns der in demselben Schichtkörper erzeugten Mehrzahl von Merkmalspunkten mit der in einem anderen Schichtkörper, der an diesen Schichtkörper angrenzt bzw. benachbart dazu ist, erzeugten Mehrzahl von Merkmalspunkten und Festlegens einer Linie, welche die gekoppelten Merkmalspunkte koppelt, als den Fertigungspfad;
einen Vorgang des Ausgebens der Steuerungs- bzw. Regelungsinformationen, die Informationen über den festgelegten Fertigungspfad beinhalten; und
wobei das Programm ferner den Computer veranlasst, auszuführen:
einen Vorgang des Berechnens einer Pfadlänge des Fertigungspfads und des Bestimmens, ob die Merkmalspunkte gekoppelt sind, basierend auf der Pfadlänge; und/oder
einen Vorgang des Berechnens einer Krümmungsverteilung des Fertigungspfads und des Bestimmens, ob die Merkmalspunkte gekoppelt sind, basierend auf der Krümmungsverteilung.

8. Programm nach Anspruch 7, wobei der Vorgang des Festlegens des Fertigungspfads beinhaltet:
Zuordnen von unabhängigen ersten Indizes zu der Mehrzahl von Merkmalspunkten in der Reihenfolge entlang der spezifischen Richtung in dem Schichtkörper und Zuordnen von unabhängigen zweiten Indizes zu der Mehrzahl von Merkmalspunkten in der Reihenfolge entlang einer Teilungsrichtung der Mehrzahl von Schichtkörpern, und
Festlegen, als den Fertigungspfad, einer Linie, welche die Merkmalspunkte mit demselben zugeordneten ersten Index unter der Mehrzahl von Merkmalspunkten in der Reihenfolge des zweiten Index koppelt.

9. Programm nach Anspruch 7, wobei die spezifische Richtung eine Längsrichtung der Schweißraupe ist, wenn angenommen wird, dass eine Form jedes der Schichtkörper durch eine Schweißraupe oder eine Mehrzahl der Schweißraupen (B) gebildet wird.

## Revendications

1. Dispositif de génération d'informations de commande (200) pour générer des informations de commande pour commander un dispositif de fabrication additive (100) qui construit des formes de couche en utilisant des cordons de soudure (B) formés en ajoutant un matériau d'usinage fondu à une surface devant être usinée tout en déplaçant une position d'usinage le long d'un trajet de fabrication, et construit un objet fabriqué tridimensionnel (W) en déposant les formes de couche, le dispositif de génération d'informations de commande (200) comprenant :
un module d'acquisition de forme (31) configuré pour acquérir des informations sur la forme tridimensionnelle de l'objet fabriqué (W) ;
le dispositif de génération d'informations de commande (200) étant **caractérisé par** :
un module de génération de groupe de points (33) configuré pour générer une pluralité de points caractéristiques le long d'une direction spécifique dans la couche dans chacun de corps stratifiés obtenus en divisant la forme tridimensionnelle en une pluralité de couches ;
un module de définition de trajet de fabrication (35) configuré pour coupler la pluralité de points caractéristiques générés dans le même corps stratifié à la pluralité de points caractéristiques générés dans un autre corps stratifié adjacent au corps stratifié, et définir une ligne couplant les points caractéristiques couplés en tant que trajet de fabrication ;
un module de sortie (37) configuré pour sortir les informations de commande incluant des informations sur le trajet de fabrication défini ; et
dans lequel le dispositif de génération d'informations de commande (200) comprend en outre :
un premier module de détermination (39) configuré pour calculer une longueur de trajet du trajet de fabrication défini par le module de définition de trajet de fabrication (35) et déterminer si les points caractéristiques sont couplés en fonction de la longueur de trajet ; et/ou
un second module de détermination (41) configuré pour calculer une distribution de courbure du trajet de fabrication défini par le module de définition de trajet de fabrication (35) et déterminer si les points caractéristiques sont couplés en fonction de la distribution de courbure.

2. Dispositif de génération d'informations de commande selon la revendication 1, dans lequel
le module de définition de trajet de fabrication (35) est configuré pour attribuer des premiers indices indépendants à la pluralité de points caractéristiques dans l'ordre le long de la direction spécifique dans le corps stratifié, et attribuer des seconds indices indépendants à la pluralité de points caractéristiques dans l'ordre le long d'une direction de division de la pluralité de corps stratifiés, et
définir, en tant que trajet de fabrication, une ligne couplant les points caractéristiques ayant le même premier indice attribué parmi la pluralité de points caractéristiques dans l'ordre du second indice.

3. Dispositif de génération d'informations de commande selon la revendication 1, dans lequel
la direction spécifique est une direction longitudinale du cordon de soudure lorsqu'il est supposé qu'une forme de chacun des corps stratifiés est formée par un cordon de soudure ou une pluralité des cordons de soudure (B).

4. Procédé de génération d'informations de commande pour générer des informations de commande pour commander un dispositif de fabrication additive (100) qui construit des formes de couche en utilisant des cordons de soudure (B) formés en ajoutant un matériau d'usinage fondu à une surface devant être usinée tout en déplaçant une position d'usinage le long d'un trajet de fabrication, et construit un objet fabriqué tridimensionnel (W) en déposant les formes de couche, le procédé de génération d'informations de commande comprenant :
acquérir (S1) des informations sur la forme tridimensionnelle de l'objet fabriqué (W) ;
le procédé de génération d'informations de commande étant **caractérisé par** :
générer une pluralité de points caractéristiques le long d'une direction spécifique dans la couche dans chacun de corps stratifiés obtenus en divisant la forme tridimensionnelle en une pluralité de couches ;
coupler la pluralité de points caractéristiques générés dans le même corps stratifié à la pluralité de points caractéristiques générés dans un autre corps stratifié adjacent au corps stratifié, et définir une ligne couplant les points caractéristiques couplés en tant que trajet de fabrication ;
sortir les informations de commande incluant des informations sur le trajet de fabrication défini ; et
dans lequel le procédé de génération d'informations de commande comprend en outre :
calculer une longueur de trajet du trajet de fabrication défini et déterminer si les points caractéristiques sont couplés en fonction de la longueur de trajet ; et/ou
calculer une distribution de courbure du trajet de fabrication défini et déterminer si les points caractéristiques sont couplés en fonction de la distribution de courbure.

5. Procédé de génération d'informations de commande selon la revendication 4, dans lequel
la définition du trajet de fabrication inclut
attribuer des premiers indices indépendants à la pluralité de points caractéristiques dans l'ordre le long de la direction spécifique dans le corps stratifié, et attribuer des seconds indices indépendants à la pluralité de points caractéristiques dans l'ordre le long d'une direction de division de la pluralité de corps stratifiés, et
définir, en tant que trajet de fabrication, une ligne couplant les points caractéristiques ayant le même premier indice attribué parmi la pluralité de points caractéristiques dans l'ordre du second indice.

6. Procédé de génération d'informations de commande selon la revendication 4, dans lequel
la direction spécifique est une direction longitudinale du cordon de soudure lorsqu'il est supposé qu'une forme de chacun des corps stratifiés est formée par un cordon de soudure ou une pluralité des cordons de soudure (B).

7. Programme pour générer des informations de commande pour commander un dispositif de fabrication additive (100) qui construit des formes de couche en utilisant des cordons de soudure (B) formés en ajoutant un matériau d'usinage fondu à une surface devant être usinée tout en déplaçant une position d'usinage le long d'un trajet de fabrication, et construit un objet fabriqué tridimensionnel (W) en déposant les formes de couche, le programme amenant un ordinateur à exécuter :
une procédure d'acquisition (S1) d'informations sur la forme tridimensionnelle de l'objet fabriqué (W) ;
le programme étant **caractérisé par** :
une procédure de génération d'une pluralité de points caractéristiques le long d'une direction spécifique dans la couche dans chacun de corps stratifiés obtenus en divisant la forme tridimensionnelle en une pluralité de couches ;
une procédure de couplage de la pluralité de points caractéristiques générés dans le même corps stratifié à la pluralité de points caractéristiques générés dans un autre corps stratifié adjacent au corps stratifié, et de définition d'une ligne couplant les points caractéristiques couplés en tant que trajet de fabrication ; une procédure de sortie des informations de commande incluant des informations sur le trajet de fabrication défini ; et
dans lequel le programme amène en outre l'ordinateur à exécuter :
une procédure de calcul d'une longueur de trajet du trajet de fabrication et de détermination du fait que les points caractéristiques soient couplés en fonction de la longueur de trajet ; et/ou
une procédure de calcul d'une distribution de courbure du trajet de fabrication et de détermination du fait que les points caractéristiques soient couplés en fonction de la distribution de courbure.

8. Programme selon la revendication 7, dans lequel la procédure de définition du trajet de fabrication inclut
attribuer des premiers indices indépendants à la pluralité de points caractéristiques dans l'ordre le long de la direction spécifique dans le corps stratifié, et attribuer des seconds indices indépendants à la pluralité de points caractéristiques dans l'ordre le long d'une direction de division de la pluralité de corps stratifiés, et
définir, en tant que trajet de fabrication, une ligne couplant les points caractéristiques ayant le même premier indice attribué parmi la pluralité de points caractéristiques dans l'ordre du second indice.

9. Programme selon la revendication 7, dans lequel la direction spécifique est une direction longitudinale du cordon de soudure lorsqu'il est supposé qu'une forme de chacun des corps stratifiés est formée par un cordon de soudure ou une pluralité des cordons de soudure (B).
